# EUROPÄISCHE PATENTANMELDUNG

(11) **EP 0 884 589 A2**
(43) Veröffentlichungstag der Anmeldung: **16.12.1998**
(21) Anmeldenummer: 98110346.8
(22) Anmeldetag: 05.06.1998
(51) Int. Cl.: G01N 31/20, G01N 21/85

(54) **Verfahren zur Bestimmung der Grenzflächenadsorption**

(30) Priorität: 09.06.1997 DE 19724238
(71) Anmelder: BASF AKTIENGESELLSCHAFT, 67056 Ludwigshafen (DE)
(72) Erfinder: Schrof, Wolfgang, Dr., 67271 Neuleiningen (DE); Runge, Frank, Dr., 67133 Maxdorf (DE); Klingler, Jürgen, Dr., 67112 Mutterstadt (DE)
(74) Vertreter: Isenbruck, Günter, Dr.

(57) **Zusammenfassung**

Verfahren und Vorrichtung zur Bestimmung der Belegung der Grenzfläche zwischen einer flüssigen ersten Phase und einer flüssigen oder gasförmigen zweiten Phase durch mindestens eine Molekülart, wobei nacheinander mindestens die folgenden Verfahrensschritte ausgeführt werden: Die Erzeugung eines Stromes von Tropfen, die mindestens die flüssige erste Phase enthalten, derart, daß sich die Tropfen entlang einer Tropfenbahn bewegen, und die berührungsfreie Bestimmung eines Maßes für die Belegung der Grenzfläche durch die mindestens eine Molekülart an mindestens zwei verschiedenen Punkten entlang der Tropfenbahn.

## Beschreibung

Die vorliegende Erfindung bezieht sich auf ein Verfahren und auf eine Vorrichtung zur Bestimmung der Grenzflächenadsorption, insbesondere der Kinetik der Grenzflächenadsorption von Substanzen.

Bei der Entwicklung von Tensiden, Emulgatoren, Schutzkolloiden und vielen weiteren grenzflächenaktiven Substanzen müssen verschiedene Parameter der Grenzflächenakivität bestimmt werden. Einer dieser Parameter ist die Grenzflächenadsorption. Diese Größe gibt an, zu welchem prozentualen Anteil die Grenzfläche zweier Testsubstanzen durch eine weitere Testsubstanz bedeckt ist. Dabei interessiert nicht nur der letztlich sich einstellende Gleichgewichtszustand in einem statischen System, sondern vor allem auch die dynamische Entwicklung bis zu diesem Endzustand.

Mit bekannten Verfahren zur Bestimmung der Grenzflächenadsorption können dynamische Prozesse jedoch nur begrenzt beobachtet werden. Die zeitliche Entwicklung eines Systems muß nämlich bei diesen Verfahren ausschließlich direkt beobachtet werden, das heißt in Realzeit der Dynamik. Zum Beispiel wird die Berstmembranmethode, wie sie von A. Anbarci und A. Armbruster in "Bestimmung der Grenzflächenbesetzungskinetik", Tenside Surfactants Detergents 24 (1987) 2, 111, beschrieben ist, nur dann als zuverlässig angesehen, wenn mit ihr Veränderungen beobachtet werden, die im Zeitbereich von einigen Hundertstel Sekunden oder langsamer ablaufen. Die klassische Wilhelmi-Platte oder Wilhelmi-Waage weist gar nur eine Auflösung im Sekundenbereich auf. Viele interessante dynamische Erscheinungen treten aber im Millisekunden- oder sogar im Sub-Millisekundenbereich auf. Sie können mit herkömmlichen Meßverfahren nicht hinreichend zuverlässig bestimmt werden.

Aufgabe der vorliegenden Erfindung ist deshalb die Bereitstellung eines Verfahrens zur Bestimmung der Grenzflächenadsorption, mit dem dynamische Grenzflächenprozesse auch dann beobachtet werden können, wenn diese sehr schnell ablaufen. Außerdem soll dieses Meßverfahren gegen Verunreinigungen und externe Störungen möglichst unempfindlich sein.

Diese Aufgabe wird durch das erfindungsgemäße Verfahren zur Bestimmung der Belegung der Grenzfläche zwischen einer flüssigen ersten Phase und einer flüssigen oder gasförmigen zweiten Phase durch mindestens eine Molekülart gelöst. Dabei werden erfindungsgemäß nacheinander mindestens folgende Verfahrensschritte durchgeführt. Zunächst wird in einem Tropfengenerator ein Strom von Tropfen, die mindestens die flüssige erste Phase enthalten, derart erzeugt, daß sich die Tropfen entlang einer bestimmten Tropfenbahn bewegen. Dabei kann das die Tropfen umgebende Medium ein Gas, ein Vakuum oder eine Flüssigkeit sein. Die zu untersuchende Phasengrenzfläche kann sich entweder im Inneren der Tropfen ausbilden, wenn diese beide Phasen enthalten, oder an der Oberfläche der Tropfen. Dann wird eine beliebige geeignete Maßgröße für die Belegung der Grenzfläche durch die mindestens eine Molekülart an mindestens zwei verschiedenen Punkten entlang der Tropfenbahn berührungsfrei bestimmt. Es wird also der gleiche oder ein gleichartiger Tropfen in mindestens zwei verschiedenen Abständen vom Tropfengenerator betrachtet. Der Abstand eines Tropfens vom Tropfengenerator entspricht dabei dem Alter dieses Tropfens. Das Alter ist aber wiederum direkt mit dem Entwicklungszustand des Tropfens korreliert. Somit kann die Dynamik eines Grenzflächenprozesses untersucht werden, ohne daß an die Zeitauflösung des Meßverfahrens besondere Anforderungen gestellt werden. Statt einer schwierig zu erreichenden Zeitauflösung verwendet das erfindungsgemäße Verfahren also eine einfach zu verwirklichende Raumauflösung des Entwicklungsprozesses.

Je nachdem, wie detailliert, also zeitaufgelöst der Entwicklungsprozeß an der jeweiligen Grenzfläche mitverfolgt werden soll, werden die gleichen oder gleichartigen Tropfen an mehr oder weniger vielen und an mehr oder weniger beabstandeten Meßstationen entlang ihrer Flugbahn, der Tropfenbahn untersucht. Das kann dadurch geschehen, daß der Detektor für die jeweilige Maßgröße der Grenzflächenbelegung entlang der Tropfenbahn verschoben wird. Häufig wird es aber praktischer sein, mehrere gleichartige Detektoren entlang der Tropfenbahn anzuordnen und damit gleichzeitig mehrere Tropfen in einem jeweils unterschiedlichen Entwicklungsstadium zu betrachten. Die gewonnenen Daten können dann dem jeweiligen Tropfen zugeordnet werden, sodaß seine Entwicklungsgeschichte rekonstruiert werden kann. Vor allem die Stabilisierung oder auch Koaleszenz von Systemen, wie Emulsionen und Suspensionen, kann mit dem erfindungsgemäßen Verfahren beobachtet und erforscht werden.

Bei dem erfindungsgemäßen Verfahren kann als Tropfengenerator prinzipiell jede Vorrichtung verwendet werden, die geeignet ist, eine regelmäßige Folge von Flüssigkeitstropfen definierter Größe zu generieren. Vorzugsweise wird ein Tropfengenerator verwendet, bei dem durch Kontraktion und Relaxation eines Kontraktionselements regelmäßig ein oder mehrere Tropfen von einer Flüssigkeitssäule abgetrennt und ausgestoßen werden. Dieses Kontraktionselement wird vorzugsweise piezomechanisch, also mit einem Piezokristall, betätigt. Als Tropfengenerator kann auch eine Vorrichtung verwendet werden, bei der ein Flüssigkeitsstrom durch eine Düse gepreßt wird, die von einem Hüllstrom einer zweiten Flüssigkeit geeignet umspült wird.

Bei einem bevorzugten Verfahren wird der Tropfenstrom durch Vereinigung von mindestens zwei originär erzeugten Tropfenströmen gebildet. Dabei vermischen sich jeweils Tropfen aus den originär gebildeten Tropfenströmen miteinander. Im Regelfall wird man zwei originäre Tropfenströme verwenden, von denen der eine die erste Phase und der andere die zweite Phase enthält. Damit erreicht man einen genau definierten zeitlichen Nullpunkt für die Messung, nämlich den Vermischungszeitpunkt der originären Ströme. Außerdem kann durch die Vereinigung der Ströme mit hoher Geschwindigkeit eine sehr gute Durchmischung der Phasen erzielt werden, die für eine Reihe von Messungen erwünscht ist.

Die generierten Tropfen werden aus dem Tropfengenerator in regelmäßiger Folge ausgestoßen und bewegen sich dann während der Meßphase auf einer vorbestimmten Tropfenbahn, bis sie in einem Auffangbehälter aufgefangen und abgeführt werden. Die Tropfenbahn, also die Flugbahn der generierten Tropfen verläuft während der Meßphase vorzugsweise in einer Gasatmosphäre, vorzugsweise einer Inertgasatmosphäre, wie z.B. einer Stickstoff- oder Argon-Atmosphäre, um an der Tropfenoberfläche auftretende Grenzflächeneffekte möglichst ungestört beobachten zu können. Die Tropfenbahn kann aber auch durch eine Gasatmosphäre oder durch eine Flüssigkeitsumgebung führen. Dementsprechend können Grenzflächeneffekte an Grenzflächen zwischen Gasen und Flüssigkeiten, sowie zwischen zwei Flüssigkeiten untersucht werden. Dabei kann die Molekülart, deren Belegung der Grenzfläche betrachtet werden soll, Teil der Gasatmosphäre oder der Flüssigkeitsumgebung sein. Die Molekülart kann aber auch bereits in den generierten und ausgestoßenen Tropfen enthalten sein. Zu diesem Zweck wird die Molekülart der ersten Phase im Tropfengenerator zugemischt. Dies wird regelmäßig bevorzugt sein, weil dann mit dem Ausstoß der gerade gemischten Tropfen aus dem Tropfengenerator in die Tropfenbahn ein gleichbleibender zeitlicher Bezugspunkt definiert ist, ab dem die zu beobachtende Grenzflächenbelegung auftritt.

Die zweite Phase, die mit der ersten Phase die betrachtete Grenzfläche ausbildet, kann erfindungsgemäß in den Tropfen enthalten sein, so daß sich die Grenzfläche innerhalb der Tropfen ausbildet; sie kann aber auch die Tropfen entlang der Tropfenbahn umgeben, so daß die betrachtete Grenzfläche die Tropfenoberfläche ist. Diese zweite Phase kann, ebenso wie die erste Phase, aus einer Mischung mehrerer Stoffe bestehen. Voraussetzung ist nur, daß sich eine Grenzfläche zwischen der ersten und der zweiten Phase ausbilden kann.

Durch die Beobachtung von relativ kleinvolumigen Tropfen ist die Gefahr einer Verschmutzung des Meßvolumens stark reduziert. Solange der Tropfengenerator nicht kontaminiert wird, ist eine Verschmutzung einzelner Tropfen bei der regelmäßig gemessenen Menge an Tropfen ohne Bedeutung. Falls sie auftritt, brauchen lediglich die jeweiligen Einzelmeßwerte aussortiert zu werden, die restlichen Meßwerte können aber völlig uneingeschränkt weiterverwendet werden. Das erfindungsgemäße Verfahren ist somit erheblich unempfindlicher gegen Verschmutzungen von außen als die bislang bekannten Verfahren.

Für die Anwendung der Erfindung ist es auch nicht nötig, daß sich das System im thermodynamischen Gleichgewicht befindet oder daß schließlich eine mehr oder minder vollständige Belegung der Grenzfläche stattfindet. Mit der vorliegenden Erfindung können letztlich alle grenzflächenaktiven Systeme untersucht werden, die es erlauben, ein mit der Grenzflächenbelegung korreliertes Signal zu detektieren.

Als Maßgröße für die Belegung der Grenzfläche mit Molekülen kann jedes Meßsignal verwendet werden, das in seiner Stärke oder Beschaffenheit von der Quantität der Belegung abhängt. Wenn quantitative Aussagen getroffen werden sollen, muß diese Abhängigkeit des Meßsignals von der Belegung bekannt oder ermittelbar sein, es muß also eine Eichung möglich sein.

Beispiele für geeignete Meßsignale sind die Reflexion, die Streuung oder die Transmission von in die Tropfenbahn eingestrahltem Licht, insbesondere Laserlicht. Da diese Meßgrößen stark von der Grenzflächenbelegung abhängen, insbesondere wenn die Grenzfläche mit der Tropfenoberfläche identisch ist, können aus ihrer Veränderung entlang der Tropfenbahn Rückschlüsse auf die Dynamik der Grenzflächenadsorption gezogen werden. Andere geeignete Meßgrößen sind Ramanstreulichtsignale und Fluoreszenzlichtsignale, die die Unterscheidung verschiedener Stoffe zulassen und deren Wellenlänge und Intensität in erster Linie von den an der Grenzfläche, insbesondere der Tropfenoberfläche befindlichen Molekülen bestimmt werden. Fluoreszenzsignale können dabei der beobachteten Molekülart selbst oder einer Markierungssubstanz entstammen. Es können aber auch radioaktiv markierte Substanzen bzw. Moleküle eingesetzt werden.

Ein bevorzugtes Verfahren zur Beobachtung der Effekte an der Grenzfläche ist die konfokale Mikroskopie. Dabei fokussiert man bevorzugt auf die Grenzfläche in oder auf den sich auf der Tropfenbahn bewegenden Tropfen. Dies erfordert jedoch eine konstante Flugbahn der Tropfen, was wiederum einen Tropfengenerator voraussetzt, der eine gleichbleibende Tropfengröße und Tropfenausstoßgeschwindigkeit aufweist. Wenn diese Voraussetzungen erfüllt sind, können mit einem konfokalen Mikroskop Grenzflächenentwicklungen, zum Beispiel einer bestimmten Molekülart, an der Tropfengrenzfläche unmittelbar beobachtet werden. Umgekehrt kann bei Fokussierung auf andere Tropfenbereiche oder Tropfenschichten auch die Entreicherung von bestimmten Molekülen ermittelt werden.

Vorzugsweise wird im Rahmen der vorliegenden Erfindung die Morphology Dependant Resonances (MDR) Spektroskopie verwendet. Dabei wird eine Feldüberhöhung in grenzflächennahen Schwingungsmoden des Lichts in dem jeweiligen Tropfen ausgenützt, um ein Fluoreszenzsignal oder ein Ramanstreulichtsignal zu erhalten, das fast ausschließlich von der Grenzflächenbelegung abhängt.

Weitere im Rahmen der Erfindung prinzipiell geeignete Meßverfahren sind Verfahren, bei denen eine Teilchenart markiert wird, sodaß ihr Erscheinen auf der Grenzfläche detektiert werden kann. Beispiele hierfür sind mit fluoreszierenden oder radioaktiven Markern gekennzeichnete Teilchen.

Erfindungsgemäß wird auch eine Vorrichtung zur Bestimmung der Belegung einer Grenzfläche zwischen einer flüssigen ersten Phase und einer flüssigen oder gasförmigen zweiten Phase mit mindestens einer Molekülart zur Verfügung gestellt, die mindestens folgende Bauteile aufweist: Einen Tropfengenerator, der derart ausgebildet und angeordnet ist, daß er Tropfen erzeugen kann, die mindestens die flüssige erste Phase enthalten, und die sich entlang einer Tropfenbahn bewegen, und einen Detektor, der derart ausgebildet und angeordnet ist, daß er ein Maß für die Belegung der Grenzfläche in der Tropfenbahn mit der mindestens einen Molekülart berührungsfrei bestimmen kann. Mit einer derartigen Vorrichtung kann das oben beschriebene Verfahren ausgeführt werden.

Bevorzugt ist eine Vorrichtung mit mindestens zwei Tropfengeneratoren, die derart ausgebildet und angeordnet sind, daß sie jeweils einen originären Tropfenstrom erzeugen und diese originären Tropfenströme zu dem untersuchten Tropfenstrom vereinigt werden.

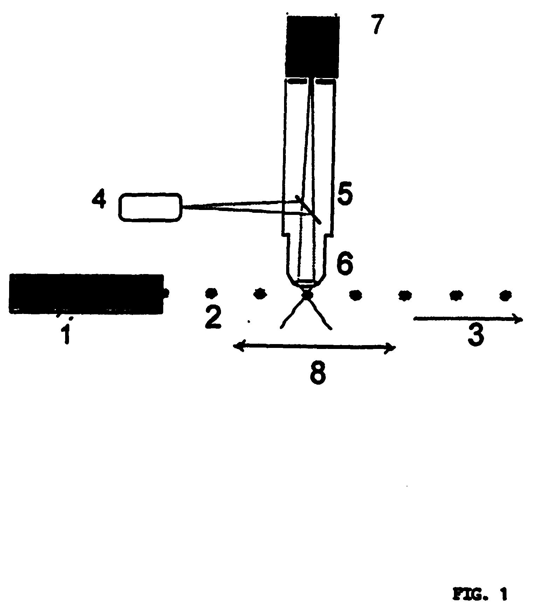

Die vorliegende Erfindung wird im folgenden an Hand der Figur 1 beschrieben. Diese zeigt eine erfindungsgemäße Vorrichtung mit der das erfindungsgemäße Verfahren durchgeführt werden kann.

Die Vorrichtung nach Figur 1 weist einen Tropfengenerator 1 auf, der regelmäßig gleichmäßige Tropfen 2 generiert und ausstößt. Die Tropfen 2 bewegen sich dann auf einer Tropfenbahn oder Flugbahn, hier durch Pfeil 3 gekennzeichnet. Ein Laser 4 ist derart angeordnet, daß er über den halbdurchlässigen Spiegel 5 und die Linse 6 Laserlicht in die Tropfenbahn einstrahlen kann. Das von den Tropfen 2, vor allem von den Molekülen an der Tropfenoberfläche reflektierte Licht wird über die Linse 6 und den halbdurchlässigen Spiegel 5 einem Detektor 7 zugeleitet. Der Detektor 7 kann entlang der Tropfenbahn in Richtung des Doppelpfeiles 8 verschoben werden, damit Tropfen 2 verschiedenen Alters, also mit unterschiedlich weit entwickelter Grenzflächenbelegung betrachtet werden können. Die detektierten Signale können dann anschließend in einer nicht gezeigten Auswerteeinheit ausgewertet werden.

An der in Figur 1 gezeigten Meßvorrichtung können die oben bereits angesprochenen Variationen vorgenommen werden. So kann insbesondere der bewegliche Detektor 7 durch eine Reihe von feststehenden Detektoren entlang der Flugbahn 3 ersetzt werden. Weiter kann einen Vakuumküvette vorgesehen werden, in der die Tropfenbahn 3 während der Messung der Grenzflächeneffekte verläuft. Schließlich kann auch eine Reihe anderer Maßgrößen für die Grenzflächenbelegung verwendet werden, wie es bereits oben erläutert wurde.

Die erfindungsgemäße Vorrichtung und das erfindungsgemäße Verfahren erlauben somit die schnelle, berührungsfreie und weitgehend verschmutzungssichere Bestimmung der Grenzflächenadsorption von Stoffen.

## Patentansprüche

1. Verfahren zur Bestimmung der Belegung der Grenzfläche zwischen einer flüssigen ersten Phase und einer flüssigen oder gasförmigen zweiten Phase durch mindestens eine Molekülart
**dadurch gekennzeichnet, daß**
nacheinander die folgenden Verfahrensschritte ausgeführt werden:
a) Erzeugung eines Stromes von Tropfen, die mindestens die flüssige erste Phase enthalten, derart, daß sich die Tropfen entlang einer Tropfenbahn bewegen, und
b) Berührungsfreie Bestimmung eines Maßes für die Belegung der Grenzfläche durch die mindestens eine Molekülart an mindestens zwei verschiedenen Punkten entlang der Tropfenbahn.

2. Verfahren nach Anspruch 1, dadurch gekennzeichnet, daß die Tropfen die erste und die zweite Phase enthalten.

3. Verfahren nach Anspruch 2, dadurch gekennzeichnet, daß die Tropfen entlang der Tropfenbahn in einer Inertgasatmosphäre geführt werden.

4. Verfahren nach einem der Ansprüche 1 bis 3, dadurch gekennzeichnet, daß zur Erzeugung eines Stromes von Tropfen in Verfahrensschritt a) eine Vorrichtung zur piezomechanischen Kontraktion einer Flüssigkeitssäule verwendet wird.

5. Verfahren nach einem der Ansprüche 1 bis 4, dadurch gekennzeichnet, daß in Verfahrensschritt b) die Bestimmung des Maßes für die Belegung durch eine Messung der Reflexion, Streuung oder Transmission von in die Tropfenbahn eingestrahltem Licht, vorzugsweise Laserlicht, erfolgt.

6. Verfahren nach einem der Ansprüche 1 bis 4, dadurch gekennzeichnet, daß in Verfahrensschritt b) die Bestimmung des Maßes für die Belegung durch eine Messung der Ramanstreuung von in die Tropfenbahn eingestrahltem Licht erfolgt.

7. Verfahren nach einem der Ansprüche 1 bis 4, dadurch gekennzeichnet, daß in Verfahrensschritt b) die Bestimmung des Maßes für die Belegung durch eine Messung von Fluoreszenzlicht oder radioaktiver Strahlung erfolgt, das bzw. die von den Tropfen abgestrahlt wird.

8. Verfahren nach einem der Ansprüche 1 bis 4, dadurch gekennzeichnet, daß in Verfahrensschritt b) die Bestimmung des Maßes für die Belegung durch eine Messung mit Hilfe der MDR-Spektroskopie an den Tropfen erfolgt.

9. Verfahren nach einem der Ansprüche 1 bis 4, dadurch gekennzeichnet, daß in Verfahrensschritt b) die Bestimmung des Maßes für die Belegung durch eine Messung mit Hilfe der konfokalen Mikroskopie erfolgt, wobei auf die Oberfläche der Tropfen fokussiert wird.

10. Verfahren nach einem der vorhergehenden Ansprüche, dadurch gekennzeichnet, daß in Verfahrensschritt a) der Strom von Tropfen dadurch erzeugt wird, daß mindestens zwei Ströme von Tropfen miteinander vereinigt werden.

11. Vorrichtung zur Bestimmung der Belegung einer Grenzfläche zwischen einer flüssigen ersten Phase und einer flüssigen oder gasförmigen zweiten Phase durch mindestens eine Molekülart, dadurch gekennzeichnet, daß die Vorrichtung mindestens folgende Bauteile aufweist: einen Tropfengenerator, der derart ausgebildet und angeordnet ist, daß er Tropfen erzeugen kann, die mindestens die flüssige erste Phase enthalten, und die sich entlang einer Tropfenbahn bewegen, und einen Detektor, der derart ausgebildet und angeordnet ist, daß er ein Maß für die Belegung der Grenzfläche durch die mindestens eine Molekülart in der Tropfenbahn berührungsfrei bestimmen kann.

12. Vorrichtung nach Anspruch 11, gekennzeichnet durch mindestens zwei Tropfengeneratoren, die derart ausgebildet und angeordnet sind, daß sie jeweils einen Strom von Tropfen erzeugen, die zu einem einzigen Strom von Tropfen vereinigt werden.
